# EUROPEAN PATENT SPECIFICATION

(11) **EP 4 462 614 B1**
(45) Date of publication and mention of the grant of the patent: **09.12.2026**
(21) Application number: 23743303.2
(22) Date of filing: 19.01.2023
(51) Int. Cl.: B60R 16/027, B62D 1/10, H01R 35/04, H01R 13/58, H01R 35/02, H01R 39/64

(54) **ROTARY CONNECTOR DEVICE**
DREHVERBINDERVORRICHTUNG
DISPOSITIF CONNECTEUR ROTATIF

(30) Priority: 21.01.2022 JP 2022008204
(43) Date of publication of application: 13.11.2024
(73) Proprietor: FURUKAWA ELECTRIC CO., LTD., Tokyo 100-8322 (JP); Furukawa Automotive Systems Inc., Inukami-gun, Shiga 522-0242 (JP)
(72) Inventor: TAJIRI, Yoji, Inukami-gun, Shiga 522-0242 (JP); KAWAMURA, Yukihiro, Inukami-gun, Shiga 522-0242 (JP); SUZUKI, Yoshiyuki, Inukami-gun, Shiga 522-0242 (JP); ARAKAWA, Hayato, Inukami-gun, Shiga 522-0242 (JP); KAKUDO, Takahisa, Inukami-gun, Shiga 522-0242 (JP); HAMASAKI, Shinichi, Inukami-gun, Shiga 522-0242 (JP)
(74) Representative: Weickmann & Weickmann PartmbB
(86) International application number: PCT/JP2023/001460
(87) International publication number: WO 2023/140310

(56) References cited:
- EP-A1- 0 579 188
- JP-A- H06 338 371
- JP-A- H1 074 573
- JP-U- H0 545 978
- JP-U- H01 168 986
- US-A- 4 824 396
- US-A- 4 936 782

## Description

### Technical Field

The technology disclosed in the present application relates to a rotary connector device.

### Background Art

WO2017/208544 A1 describes the rotary connector 1 electrically connecting an electric device provided to a steering wheel and an electric device provided to a vehicle body. The rotary connector 1 includes the rotor 2, the stator 3, the rotor-side connector portion 2B, the stator-side connector portion 3B, and the flexible printed circuit boards 4 and 5. The rotor-side connector portion 2B is provided to the rotor 2. The stator-side connector portion 3B is provided to the stator. The rotor-side connector portion 2B provided in the rotor-side lead block 7 and the stator-side connector portion 3B provided in the stator-side lead block 9 are electrically connected by the flexible printed circuit boards 4 and 5.

The connector portion of the external cable fits in the rotor-side connector portion 2B. In a state where the connector portion of the external cable fits in the rotor-side connector portion 2B, the terminal of the connector portion of the external cable contacts the terminal of the rotor-side lead block 7 provided in the rotor-side connector portion 2B. The external cable electrically connects, for example, the lead block 7 provided in the rotor-side connector portion 2B and the electric device provided to the steering wheel. The electric device provided to the steering wheel is electrically connected to the electric device provided to the vehicle body via the external cable and the flexible printed circuit boards 4 and 5.

US 4 936 782 shows a rotary connector device according to the preamble of claim 1.

### Summary of Invention

### Technical Problem

However, there are cases where the rotary connector 1 is attached to the vehicle body in a state where the rotational axis of the rotor 2 is misaligned from the rotational axis of the steering wheel. In such cases, the misalignment between the rotational axis of the rotor 2 and the rotational axis of the steering wheel causes relative movement between the rotor-side connector part 2B and the steering wheel along a plane perpendicular to the rotational axis while the rotor 2 and the steering wheel are rotating. This relative movement exerts forces in various directions through the external cable to the connector part of the external cable connected to the rotor-side connector part 2B, placing physical load on the coupling portion between the rotor-side connector part 2B and the connector portion of the external cable. As a result, the contact portion between the rotor-side connector part 2B and the connector part of the external cable can experience wear.

An object of the technology of the present application is to reduce or prevent wear of at least one of a rotator-side connector and a harness connector of a wire harness which is caused by misalignment between a rotational axis of a rotator and a rotational axis of a steering wheel.

### Solution to Problem

In accordance with a first aspect the invention provides a rotary connector device according to claim 1. The rotator includes a rotator-side connector detachably connectable to a harness connector provided to an end portion of a cable of a wire harness. The rotator is provided rotatably relative to the stator about a rotational axis. The cable holder is provided to the rotator to hold the cable in a state where the harness connector is connected to the rotator-side connector.

With the rotary connector device according to the invention, since the cable is held by the cable holder provided to the rotator in the state where the harness connector is connected to the rotator-side connector, the rotational axis of the rotator is misaligned from the steering rotational axis of the steering wheel, the cable holder can reduce or prevent force transmitted from the cable of the wire harness to the harness connector during the rotation of the rotator and the steering wheel. Thus, it is possible to reduce or prevent the relative movement between the rotator-side connector and the harness connector during the rotation of the rotator and the steering wheel even if the rotational axis of the rotator is misaligned from the steering rotational axis. Accordingly, it is possible to reduce or prevent wear on at least one of the rotator-side connector and the harness connector that could be caused by the misalignment between the rotational axis and the steering rotational axis.
In accordance with the invention, the cable holder includes a contact surface contacting the cable in a state where the cable holder holds the cable. The contact surface is provided in a position separate from the rotator-side connector. With this rotary connector device, since the contact surface is provided in the position separate from the rotator-side connector, it becomes easier to attach the cable of the wire harness to the cable holder.

In accordance claim 2, the cable holder is provided to the rotator to hold the cable in a position separate from the harness connector in a state where the harness connector is connected to the rotator-side connector.

With the rotary connector device according to claim 2, since the cable is held by the cable holder in the position separate from the harness connector, it is possible to improve the flexibility of arrangement of the cable holder relative to the harness connector.

In accordance with claim 3, the rotator includes: a rotator body provided rotatably relative to the stator about a rotational axis; and the rotator-side connector protruding along the rotational axis from the rotator body. The cable holder is provided to at least one of the rotator-side connector and the rotator body.

With the rotary connector device according to claim 3, it is possible to utilize at least one of the rotator-side connector and the rotator body as a place where the cable holder is arranged, improving the flexibility of arrangement of the cable holder.

In accordance with claim 4, the rotator-side connector includes a connector housing space housing the harness connector in a state where the harness connector is connected to the rotator-side connector. The cable holder is arranged outside of the connector housing space when viewed from an axial direction defined along the rotational axis.

With the rotary connector device according to claim 4, it is possible to utilize an external space of the connector housing space as a place where the cable holder is arranged, improving the flexibility of arrangement of the cable holder.

In accordance with claim 5, the rotator-side connector includes a connector case including the connector housing space. The cable holder is provided to the connector case.

With the rotary connector device according to claim 5, since the cable holder is provided to the connector case, it is possible to arrange the cable holder near the harness connector, the cable holder can reliably reduce or prevent force transmitted from the cable of the wire harness to the harness connector during the rotation of the rotator and the steering wheel.

In accordance with claim 6, the rotator-side connector includes an outer surface forming an outline of the rotator-side connector when viewed from an axial direction defined along the rotational axis. The cable holder is provided to the outer surface.

With the rotary connector device according to claim 6, it is possible to utilize the outer surface of the rotator-side connector as a portion to which the cable holder is attached. Accordingly, it is possible to arrange the cable holder near the harness connector, and the cable holder can more reliably reduce or prevent force transmitted from the cable of the wire harness to the harness connector during the rotation of the rotator and the steering wheel.

In accordance with claim 7, the outer surface of the rotator-side connector includes: a first outer surface arranged in a position farther from the rotational axis than the connector housing space; a second outer surface provided on an opposite side of the first outer surface across the connector housing space; a third outer surface extending from the first outer surface to the second outer surface; and a fourth outer surface extending from the first outer surface to the second outer surface and provided on an opposite side of the third outer surface across the connector housing space. The cable holder is provided to at least one of the first outer surface, the second outer surface, the third outer surface, and the fourth outer surface.

With the rotary connector device according to claim 7, it is possible to utilize at least one of the first outer surface, the second outer surface, the third outer surface, and the fourth outer surface as a portion to which the cable holder is attached, improving the flexibility of arrangement of the cable holder.

In accordance with the invention, the cable holder includes a contact surface contacting the cable in a state where the cable holder holds the cable. The contact surface is provided in a position separate from the rotator-side connector.

With this rotary connector device, since the contact surface is provided in the position separate from the rotator-side connector, it becomes easier to attach the cable of the wire harness to the cable holder.

In accordance with claim 8, the contact surface extends in at least one of a longitudinal direction of the cable and a circumferential direction defined along an outer periphery of the cable in a state where the cable holder holds the cable.

With the rotary connector device according to claim 8, since the contact surface extends along at least one of the longitudinal direction and the circumferential direction of the cable, it becomes easier to ensure a larger area of the contact surface. Thus, the cable holder can reliably hold the cable.

In accordance with claim 9, the cable holder includes: a holder body including the contact surface; and a coupling portion coupling the rotator and the holder body.

With the rotary connector device according to claim 9, the coupling portion can reliably couple the holder body to the rotator.

In accordance claim 10, the holder body includes a holding hole in which the cable is arranged in a state where the cable holder holds the cable. An inner peripheral surface of the holding hole includes the contact surface.

With the rotary connector device according to claim 10, the holding hole of the holder body can reliably hold the cable of the wire harness.

In accordance with claim 11, the holder body extends along a longitudinal direction of the cable in a state where the cable holder holds the cable.

With the rotary connector device according to claim 11, the holder body can reliably hold the cable.

In accordance with claim 12, the cable holder includes an attachment portion including an attachment hole and provided to the rotator. The coupling portion protrudes from the holder body and inserted in the attachment hole in a state where the coupling portion couples the rotator and the holder body.

With the rotary connector device according to claim 12, the coupling portion and the attachment portion enable the holder body to be attached to the rotator.

In accordance with claim 13, the attachment portion is a separate member from the rotator-side connector and is attached to the rotator-side connector.

With the rotary connector device according to claim 13, since the attachment portion is a separate member from the rotator-side connector, the structure of the attachment portion can be modified depending on the specification of the rotary connector device. Therefore, the cable holder can be applied to various rotary connector devices. Additionally, the cable holder can be retrofitted to the rotator-side connector of a rotary connector device that is not equipped with the cable holder.

### Advantageous Effects of Invention

With the technology disclosed in the present application, it is possible to reduce or prevent wear of at least one of the terminal of the connector of the external cable and the terminal of the rotator-side connector which is caused by misalignment between the steering rotational axis of the steering wheel and the rotational axis of the rotator.

### Brief Description of Drawings

FIG. 1 is a side elevational view of a rotary connector device in accordance with an embodiment.
FIG. 2 is a plan view of the rotary connector device shown in FIG. 1.
FIG. 3 is a cross-sectional view of the rotary connector device shown in FIG. 1.
FIG. 4 is a cross-sectional view of a coupling portion between a rotator-side connector and a harness connector of a wire harness taken along line IV-IV of FIG. 2.
FIG. 5 is a schematic diagram showing the impact of the misalignment between a rotational axis of a rotator shown in FIG. 1 and a steering axis on the coupling portion between the rotator-side connector and the harness connector of the wire harness.
FIG. 6 is a schematic diagram showing the impact of the misalignment between the rotational axis of the rotator shown in FIG. 1 and the steering axis on the coupling portion between the rotator-side connector and the harness connector of the wire harness.
FIG. 7 is a partial side elevational view of the rotary connector device shown in FIG. 1.
FIG. 8 is a partial top view of the rotary connector device shown in FIG. 1.
FIG. 9 is a partial side elevational view of the rotary connector device shown in FIG. 1.
FIG. 10 is a perspective view of a cable holder of a rotary connector device in accordance with a first modification.
FIG. 11 is a partial top view of a rotary connector device in accordance with a second modification.
FIG. 12 is a partial top view of a rotary connector device in accordance with the second modification.
FIG. 13 is a partial top view of a rotary connector device in accordance with a third modification.
FIG. 14 is a partial top view of a rotary connector device in accordance with a fourth modification.
FIG. 15 is a partial top view of a rotary connector device in accordance with a fifth modification.
FIG. 16 is a partial top view of a rotary connector device in accordance with a sixth modification.
FIG. 17 is a partial side elevational view of a rotary connector device in accordance with a seventh modification.
FIG. 18 is a partial top view of a rotary connector device in accordance with an eighth modification.

### Description of Embodiments

Embodiments will be described below with reference to the drawings. In the drawings, the same reference signs indicate corresponding or identical configurations.

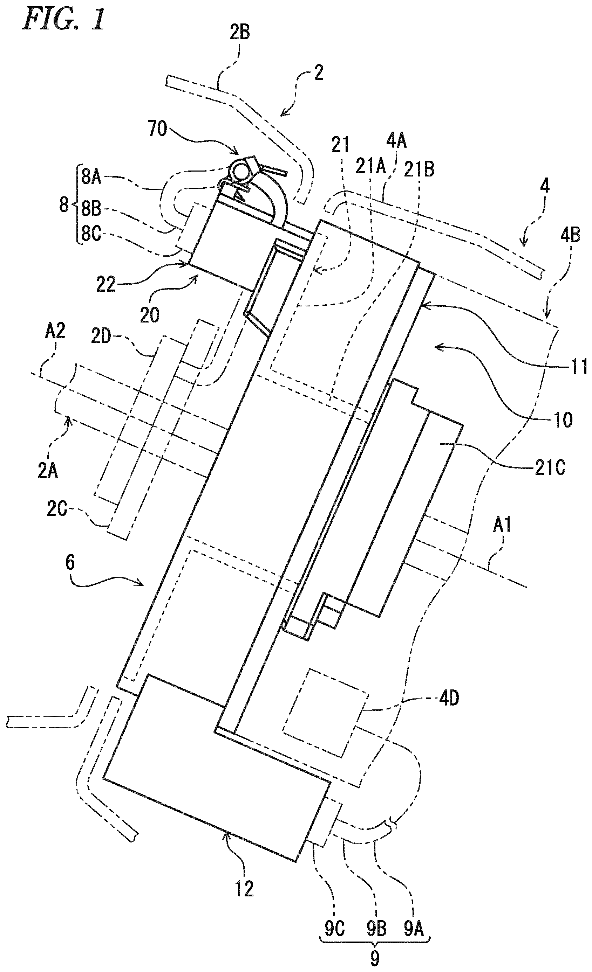

As shown in FIG. 1, a steering wheel 2 is rotatably coupled with a vehicle body 4 about a steering rotational axis A1. The steering wheel 2 includes, for example, a steering body 2A, a steering cover 2B, a support frame 2C, and a first electric device 2D. The vehicle body 4 includes, for example, a column cover 4A, a steering column 4B, and a second electric device 4D.

The steering body 2A is rotatably supported by the steering column 4B about the steering rotational axis A1. The steering cover 2B and the support frame 2C is attached to the steering body 2A. The first electric device 2D is attached to the support frame 2C. The steering body 2A, the steering cover 2B, the support frame 2C, and the first electric device 2D are rotatable relative to the vehicle body 4 about the steering rotational axis A1. The column cover 4A and the second electric device 4D are attached to the steering column 4B. The first electric device 2D is electrically connected to the second electric device 4D via the rotary connector device 6.

The rotary connector device 6 comprises a stator 10 and a rotator 20. The rotator 20 is rotatably provided relative to the stator 10 about a rotational axis A2. The stator 10 is configured to be coupled to the vehicle body 4 (for example, the steering column 4B). The rotator 20 is configured to be coupled to the steering wheel 2 (for example, the steering body 2A).

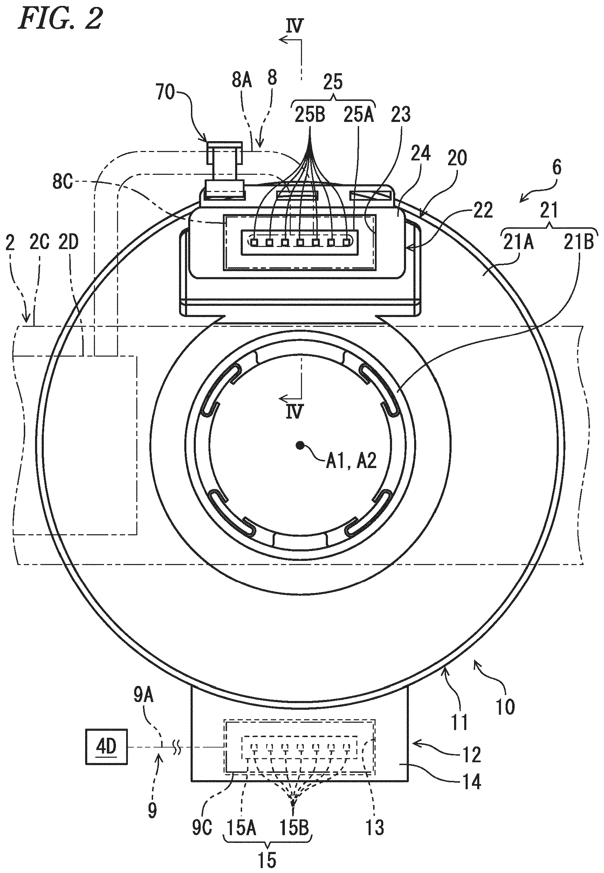

As shown in FIG. 2, the rotator 20 includes a rotator body 21 and a rotator-side connector 22. The rotator body 21 is rotatably provided relative to the stator 10 about the rotational axis A2.

As shown in FIG. 1, the rotator-side connector 22 protrudes from the rotator body 21 along the rotational axis A2. The rotator-side connector 22 is detachably connectable to a harness connector 8C provided to an end portion 8B of a cable 8A of a wire harness 8.

The rotator body 21 includes a circular plate 21A, a tubular portion 21B, and a sleeve 21C. The tubular portion 21B extends from an inner peripheral portion of the circular plate 21A along the rotational axis A2. The sleeve 21C is attached to an end portion of the tubular portion 21B. The rotator-side connector 22 extends from the circular plate 21A along the rotational axis A2.

The wire harness 8 is electrically connected to the first electric device 2D. The cable 8A of the wire harness 8 has flexibility. The rotator-side connector 22 is electrically connected to the first electric device 2D via the wire harness 8. The rotator-side connector 22 can also be referred to as a first connector 22. The wire harness 8 can also be referred to as a first wire harness 8.

As shown in FIG. 2, the rotator-side connector 22 includes a connector housing space 23. The connector housing space 23 houses the harness connector 8C in a state where the harness connector 8C is connected to the rotator-side connector 22. The rotator-side connector 22 includes a connector case 24 including the connector housing space 23.

The rotator-side connector 22 includes a first lead block 25. The first lead block 25 is provided in the connector housing space 23. The first lead block 25 includes a lead block body 25A and a plurality of lead block terminals 25B. The lead block body 25A includes an electrical insulation material. The plurality of lead block terminals 25B includes an electrical conducting material. The plurality of lead block terminals 25B are partially provided in the lead block body 25A. In a state where the harness connector 8C is provided in the connector housing space 23, the plurality of lead block terminals 25B of the first lead block 25 are contactable with a plurality of connector terminals of the harness connector 8C.

As shown in FIG. 1, the stator 10 includes a stator body 11 and a stator-side connector 12. The stator body 11 is fastened to the steering column 4B of the vehicle body 4. The stator-side connector 12 protrudes from the stator body 11 along the rotational axis A2. The stator-side connector 12 is detachably connectable to the harness connector 9C provided to an end portion 9B of a cable 9A of a wire harness 9.

The wire harness 9 is electrically connected to the second electric device 4D. The cable 9A of the wire harness 9 has flexibility. The stator-side connector 12 is electrically connected to the second electric device 4D via the wire harness 9. The stator-side connector 12 can also be referred to as a second connector 12. The wire harness 9 can also be referred to as a second wire harness 9.

The stator-side connector 12 includes a connector housing space 13. The connector housing space 13 houses the harness connector 9C in a state where the harness connector 9C is connected to the stator-side connector 12. The stator-side connector 12 includes a connector case 14 including the connector housing space 13.

The stator-side connector 12 includes a second lead block 15. The second lead block 15 is provided in the connector housing space 13. The second lead block 15 includes a lead block body 15A and a plurality of lead block terminals 15B. The lead block body 15A includes an electrical insulation material. The plurality of lead block terminals 15B include an electrical conducting material. The plurality of lead block terminals 15B are partially provided in the lead block body 15A. The plurality of lead block terminals 15B of the second lead block 15 are contactable with the plurality of connector terminals of the harness connector 9C in a state where the harness connector 9C is provided in the connector housing space 13.

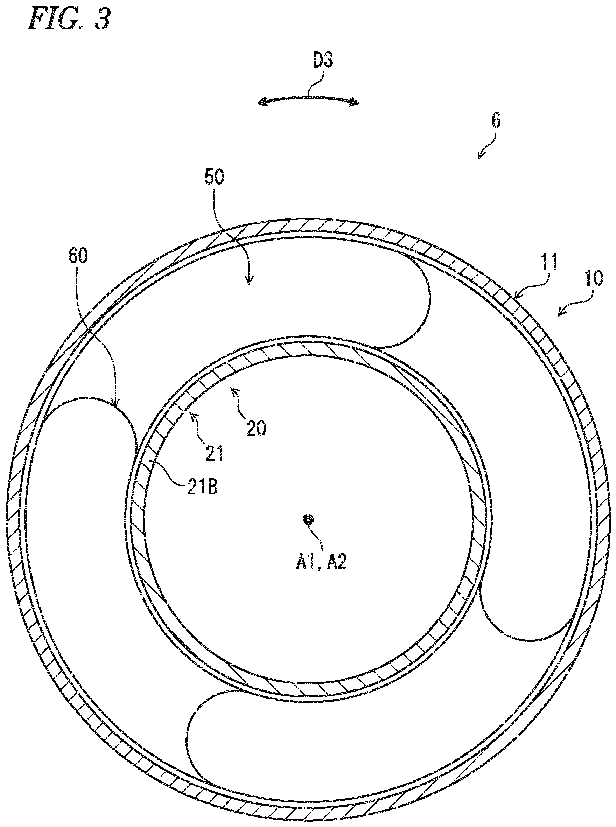

As shown in FIG. 3, the stator 10 and the rotator 20 form a cable housing space 50 provided to surround the rotational axis A2 between the stator 10 and the rotator 20. The rotary connector device 6 comprises the electric cable 60. The electric cable 60 is arranged in the cable housing space 50. The electric cable 60 electrically connects the rotator-side connector 22 (see FIG. 2) and the stator-side connector 12 (see FIG. 2). The electric cable 60 electrically connects the first lead block 25 to the second lead block 15. The electric cable 60 includes a plurality of electrical conductors. The plurality of electrical conductors of the electric cable 60 are connected to the plurality of lead block terminals 25B of the first lead block 25, respectively, and are connected to the plurality of lead block terminals 15B of the second lead block 15, respectively. The electric cable 60 has flexibility and has, for example, a flat shape. The electric cable 60 can also be referred to as a flexible flat cable 60.

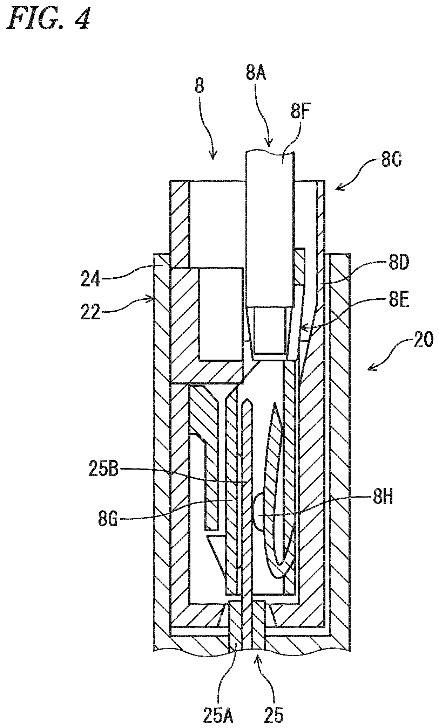

As shown in FIG. 4, the harness connector 8C includes a harness connector case 8D and a plurality of connector terminals 8E (in FIG. 4, one of the plurality of connector terminals 8E). The plurality of connector terminals 8E are arranged in positions corresponding to the plurality of lead block terminals 25B (see FIG. 2).

The cable 8A includes a plurality of cables 8F. The plurality of connector terminals 8E are electrically connected to the plurality of cables 8F. The plurality of connector terminals 8E are provided in the harness connector case 8D and are attached to the harness connector case 8D.

Each of the plurality of connector terminals 8E includes a bead 8G and a dimple 8H. The lead block terminal 25B of the lead block 25 is held between the bead 8G and the dimple 8H of the connector terminal 8E in the state where the harness connector 8C is connected to the rotator-side connector 22. Thus, the plurality of lead block terminals 25B of the lead block 25 is in contact with the plurality of connector terminals 8E of the harness connector 8C, respectively.

It is preferable to attach the rotary connector device 6 to the vehicle body 4 such that the rotational axis A2 of the rotator 20 is coincident with the steering rotational axis A1.

Due to manufacturing errors and/or mounting errors of the parts, however, there may be instances where the rotary connector device 6 is attached to the vehicle body 4 in a state where the rotational axis A2 of the rotator 20 is misaligned from the steering rotational axis A1. Due to the misalignment between the rotational axis A2 of the rotator 20 and the steering rotational axis A1, physical load can be placed on the coupling portion between the rotator-side connector 22 and the harness connector 8C during the rotation of the steering body 2A and the rotator 20, which may result in wear at the contact portion between the lead block terminal 25B and the connector terminal 8E.

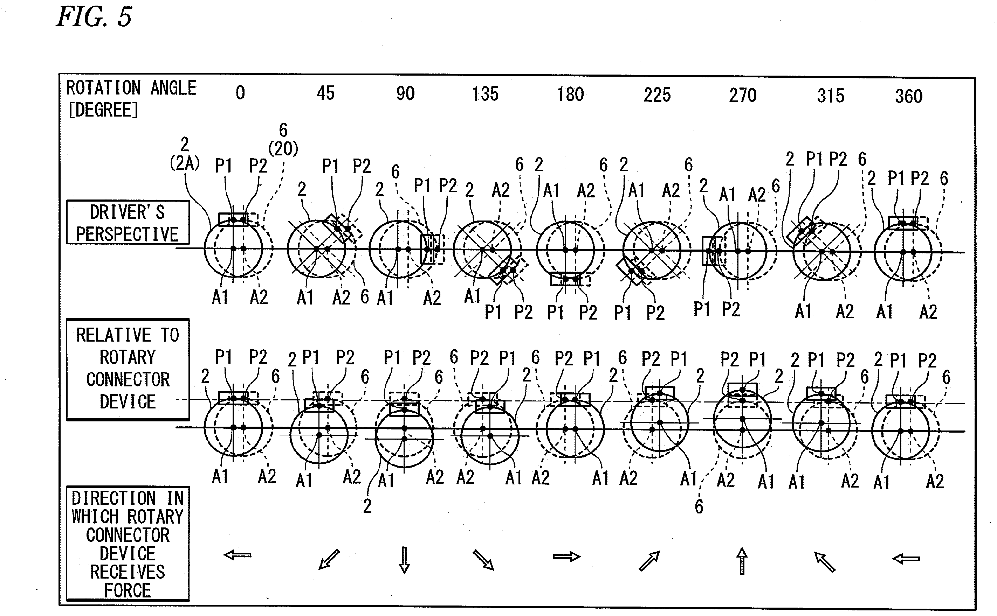

Here, using FIG. 5, the impact of the misalignment between the rotational axis A2 of the rotator 20 and the steering rotational axis A1 on the coupling portion between the rotator-side connector 22 and the harness connector 8C will be explained. The top section of FIG. 5 shows an example of the movement of the rotary connector device 6 and the steering wheel 2 from the driver's perspective. The middle section of FIG. 5 illustrates an example of the movement of the steering wheel 2 relative to the rotary connector device 6. The bottom section of FIG. 5 shows an example of the force acting from the cable 8A on the harness connector 8C connected to the rotator-side connector 22. The center point P2 of the rotator-side connector 22 is set as the reference point P1 in a case where the rotational axis A2 aligns with the steering rotational axis A1.

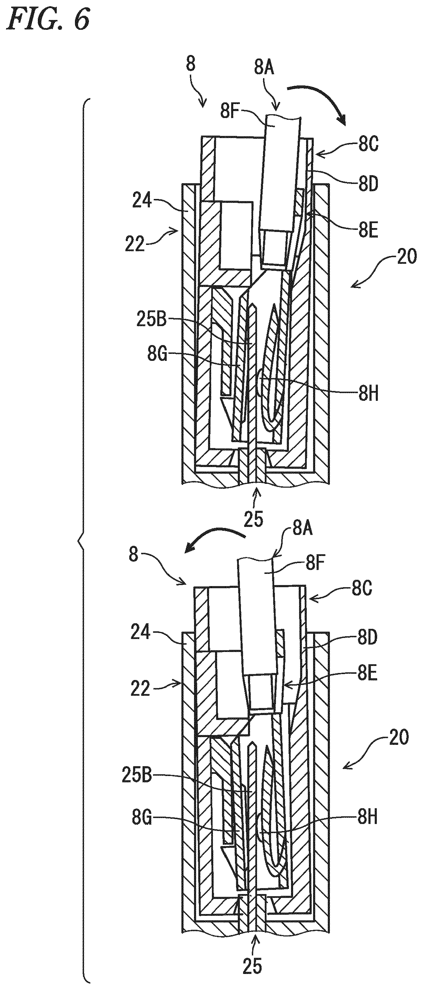

As shown in FIG. 5, in a case where the rotational axis A2 of the rotator 20 is misaligned from the steering rotational axis A1, the center point P2 of the rotator-side connector 22 is also misaligned from the reference point P1. When the steering body 2A and the rotator 20 rotate in this state, the center point P2 moves in various directions relative to the reference point P1. As a result, as shown in FIG. 6, when the steering body 2A and the rotator 20 rotate, various forces are transmitted through the cable 8A to the harness connector 8C connected to the rotator-side connector 22, causing the harness connector 8C to move within the connector housing space 23 of the rotator-side connector 22. Consequently, the lead block terminal 25B of the first lead block 25 and the connector terminal 8E of the harness connector 8C rub against each other, leading to wear on at least one of the lead block terminal 25B and the connector terminal 8E.

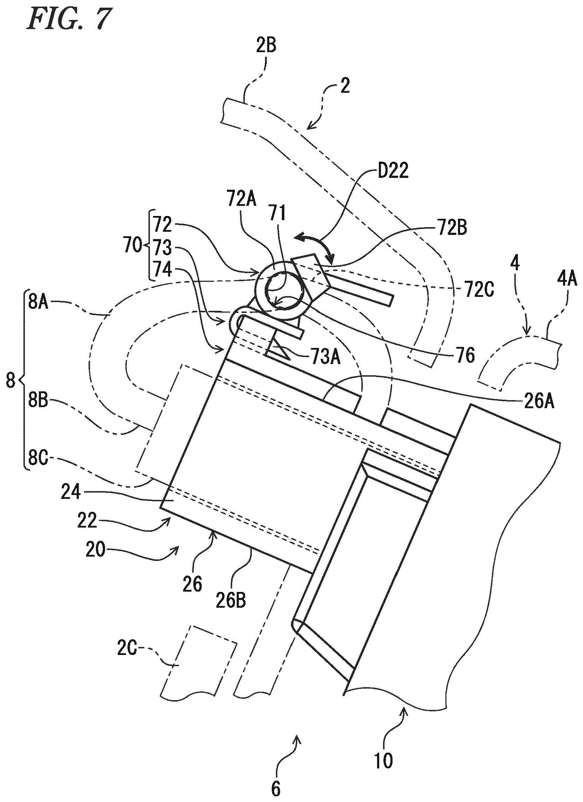

As shown in FIG. 7, the rotary connector device 6 comprises a cable holder 70. The cable holder 70 is provided to the rotator 20 to hold the cable 8A in the state where the harness connector 8C is connected to the rotator-side connector 22. The cable holder 70 is provided to the rotator 20 to hold the cable 8A in a position separate from the harness connector 8C in the state where the harness connector 8C is connected to the rotator-side connector 22.

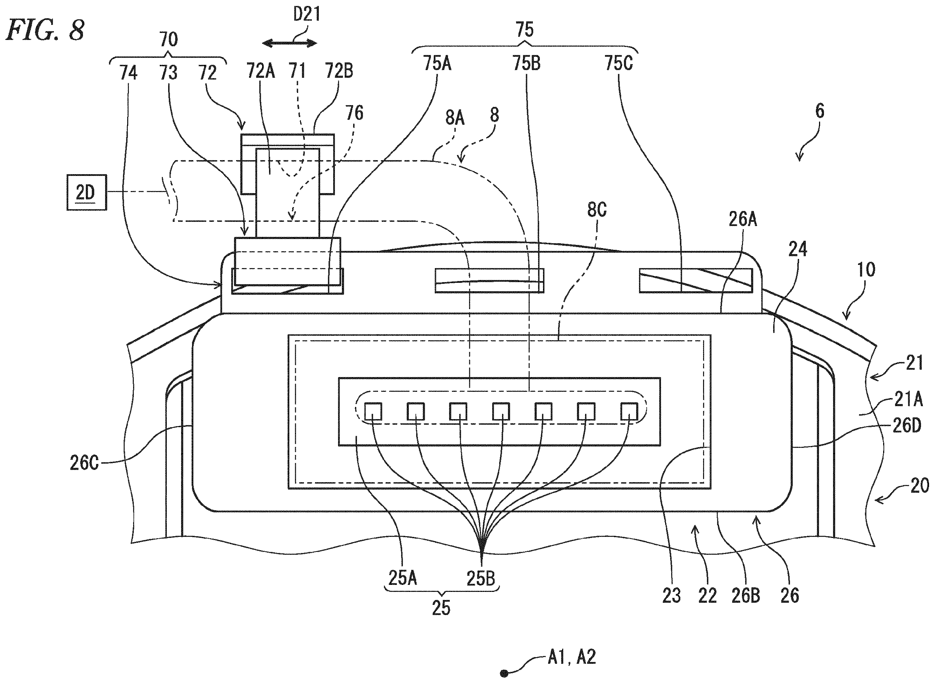

As shown in FIG. 8, the cable holder 70 is provided to at least one of the rotator-side connector 22 and the rotator body 21. In the present embodiment, the cable holder 70 is provided to the rotator-side connector 22. The cable holder 70 is coupled to the rotator-side connector 22. The cable holder 70 is provided to the connector case 24. However, the cable holder 70 can be provided to only the rotator body 21 or both the rotator-side connector 22 and the rotator body 21. The cable holder 70 can be provided to a portion other than the connector case 24.

The cable holder 70 is arranged outside of the connector housing space 23 when viewed from an axial direction D1 defined along the rotational axis A2. The rotator-side connector 22 includes an outer surface 26 forming an outline of the rotator-side connector 22 when viewed from the axial direction D1 defined along the rotational axis A2.

The outer surface 26 of the rotator-side connector 22 includes a first outer surface 26A, a second outer surface 26B, a third outer surface 26C, and a fourth outer surface 26D. The first outer surface 26A is arranged in a position farther from the rotational axis A2 than the connector housing space 23. The second outer surface 26B is provided on an opposite side of the first outer surface 26A across the connector housing space 23. The third outer surface 26C extends from the first outer surface 26A to the second outer surface 26B. The fourth outer surface 26D extends from the first outer surface 26A to the second outer surface 26B and is provided on an opposite side of the third outer surface 26C across the connector housing space 23.

The cable holder 70 is provided to at least one of the first outer surface 26A, the second outer surface 26B, the third outer surface 26C, and the fourth outer surface 26D. In the present embodiment, the cable holder 70 is provided to the first outer surface 26A. However, the cable holder 70 can be provided to at least one of the first outer surface 26A, the second outer surface 26B, the third outer surface 26C, and the fourth outer surface 26D.

As shown in FIGS. 7 and 8, the cable holder 70 includes a contact surface 71 contacting the cable 8A in a state where the cable holder 70 holds the cable 8A. The contact surface 71 is provided in a position separate from the rotator-side connector 22. The contact surface 71 extends along at least one of a longitudinal direction D21 of the cable 8A and a circumferential direction D22 defined along an outer periphery of the cable 8A in the state where the cable holder 70 holds the cable 8A. In the present embodiment, the contact surface 71 extends along the longitudinal direction D21 and the circumferential direction D22 in the state where the cable holder 70 holds the cable 8A. However, the contact surface 71 can extend along only one of the longitudinal direction D21 and the circumferential direction D22 in the state where the cable holder 70 holds the cable 8A.

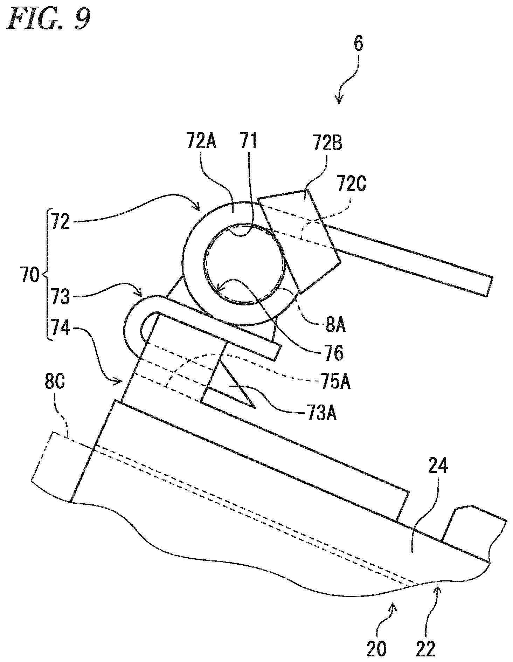

As shown in FIG. 9, the cable holder 70 includes: a holder body 72 including the contact surface 71; and a coupling portion 73 coupling the rotator 20 and the holder body 72. The holder body 72 includes a holding hole 76 in which the cable 8A is arranged in the state where the cable holder 70 holds the cable 8A. The inner peripheral surface of the holding hole 76 includes the contact surface 71. The holder body 72 extends along the longitudinal direction D21 of the cable 8A in the state where the cable holder 70 holds the cable 8A.

The holder body 72 includes a band 72A and a fastening portion 72B. The fastening portion 72B is provided to an end portion of the band 72A. The fastening portion 72B includes an insertion hole 72C in which the band 72A is inserted. A holding hole 76 is formed by the band 72A and the fastening portion 72B in a state where the band 72A is inserted in the insertion hole 72C of the fastening portion 72B. For example, each of the band 72A and the insertion hole 72C includes concavity and convexity. Meshing the concavity and convexity of the band 72A with the concavity and convexity of the insertion hole 72C restricts the band 72A from moving relative to the fastening portion 72B in a direction in which the band 72A is pulled out from the insertion hole 72C. Accordingly, the cable holder 70 can securely hold the cable 8A of the wire harness 8.

As shown in FIG. 8, the cable holder 70 includes an attachment portion 74 provided to the rotator 20. The attachment portion 74 includes an attachment hole 75. In the present embodiment, the attachment portion 74 is a separate member from the rotator-side connector 22 and is attached to the rotator-side connector 22. The attachment hole 75 includes a plurality of attachment holes 75A, 75B, and 75C. However, the total number of the attachment holes of the attachment portion 74 is not limited to three. The attachment portion 74 can be integrally provided with the rotator-side connector 22 as a one-piece member.

As shown in FIG. 9, the coupling portion 73 protrudes from the holder body 72. The coupling portion 73 is inserted in the attachment hole 75 in a state where the coupling portion 73 couples the rotator 20 and the holder body 72. The coupling portion 73 is inserted in one of the plurality of attachment holes 75A, 75B, and 75C (in FIG. 8, the attachment hole 75A) in the state where the coupling portion 73 couples the rotator 20 and the holder body 72.

The coupling portion 73 includes the hook 73A. The hook 73A is hooked onto the attachment portion 74 in the state where the coupling portion 73 couples the rotator 20 and the holder body 72. However, the structure of the coupling portion 73 is not limited to the illustrated structure.

As shown in FIGS. 7 and 8, since the cable holder 70 holds the cable 8A of the wire harness 8, even if the rotational axis A2 of the rotator 20 is misaligned from the steering rotational axis A1, it is possible to reduce or prevent force transmitted through the cable 8A to the harness connector 8C connected to the rotator-side connector 22. Accordingly, when the rotator 20 and the steering wheel 2 are rotated, it is possible to reduce or prevent the movement of the harness connector 8C in the connector housing space 23 of the rotator-side connector 22, and then it is possible to reduce or prevent wear on at least one of the lead block terminal 25B and the connector terminal 8E.

The features of the rotary connector device 6 are as follows.
(1) The rotary connector device 6 comprises the stator 10, the rotator 20, and the cable holder 70. The rotator 20 includes the rotator-side connector 22 detachably connectable to the harness connector 8C provided to the end portion 8B of the cable 8A of the wire harness 8. The rotator 20 is rotatably provided relative to the stator 10 about the rotational axis A2. The cable holder 70 is provided to the rotator 20 to hold the cable 8A in the state where the harness connector 8C is connected to the rotator-side connector 22.
   With the rotary connector device 6, since the cable 8A is held by the cable holder 70 provided to the rotator 20 in the state where the harness connector 8C is connected to the rotator-side connector 22, the rotational axis A2 of the rotator 20 is misaligned from the steering rotational axis A1 of the steering wheel 2, the cable holder 70 can reduce or prevent forces transmitted from the cable 8A of the wire harness 8 to the harness connector 8C during the rotation of the rotator 20 and the steering wheel 2. Thus, it is possible to reduce or prevent the relative movement between the rotator-side connector 22 and the harness connector 8C during the rotation of the rotator 20 and the steering wheel 2 even if the rotational axis A2 of the rotator 20 is misaligned from the steering rotational axis A1. Accordingly, it is possible to reduce or prevent wear on at least one of the rotator-side connector 22 and the harness connector 8C that could be caused by the misalignment between the rotational axis A2 and the steering rotational axis A1.
(2) The cable holder 70 is provided to the rotator 20 to hold the cable 8A in a position separate from the harness connector 8C in the state where the harness connector 8C is connected to the rotator-side connector 22. Namely, since the cable 8A is held by the cable holder 70 in the position separate from the harness connector 8C, it is possible to improve the flexibility of arrangement of the cable holder 70 relative to the harness connector 8C.
(3) The rotator 20 includes: the rotator body 21 rotatably provided relative to the stator 10 about the rotational axis A2; and the rotator-side connector 22 protruding along the rotational axis A2 from the rotator body 21. The cable holder 70 is provided to at least one of the rotator-side connector 22 and the rotator body 21. Thus, it is possible to utilize at least one of the rotator-side connector 22 and the rotator body 21 as a place where the cable holder 70 is arranged, improving the flexibility of arrangement of the cable holder 70.
(4) The rotator-side connector 22 includes the connector housing space 23 housing the harness connector 8C in the state where the harness connector 8C is connected to the rotator-side connector 22. The cable holder 70 is arranged outside of the connector housing space 23 when viewed from the axial direction D1 defined along the rotational axis A2. Thus, it is possible to utilize an external space of the connector housing space 23 as a place where the cable holder 70 is arranged, improving the flexibility of arrangement of the cable holder 70.
(5) The rotator-side connector 22 includes the connector case 24 including the connector housing space 23. The cable holder 70 is provided to the connector case 24. Since the cable holder 70 is provided to the connector case 24, it is possible to arrange the cable holder 70 near the harness connector 8C, the cable holder 70 can reliably reduce or prevent force transmitted from the cable 8A of the wire harness 8 to the harness connector 8C during the rotation of the rotator 20 and the steering wheel 2.
(6) The rotator-side connector 22 includes the outer surface 26 forming an outline of the rotator-side connector 22 when viewed from the axial direction D1 defined along the rotational axis A2. The cable holder 70 is provided to the outer surface 26. Thus, it is possible to utilize the outer surface 26 of the rotator-side connector 22 as a portion to which the cable holder 70 is attached. Accordingly, it is possible to arrange the cable holder 70 near the harness connector 8C, and the cable holder 70 can more reliably reduce or prevent force transmitted from the cable 8A of the wire harness 8 to the harness connector 8C during the rotation of the rotator 20 and the steering wheel 2.
(7) The outer surface 26 of the rotator-side connector 22 includes: the first outer surface 26A arranged in a position farther from the rotational axis A2 than the connector housing space 23; the second outer surface 26B provided to on an opposite side of the first outer surface 26A across the connector housing space 23; the third outer surface 26C extending from the first outer surface 26A to the second outer surface 26B; and the fourth outer surface 26D extending from the first outer surface 26A to the second outer surface 26B and provided on an opposite side of the third outer surface 26C across the connector housing space 23. The cable holder 70 is provided to at least one of the first outer surface 26A, the second outer surface 26B, the third outer surface 26C, and the fourth outer surface 26D. Accordingly, it is possible to utilize at least one of the first outer surface 26A, the second outer surface 26B, the third outer surface 26C, and the fourth outer surface 26D as a portion to which the cable holder 70 is attached, improving the flexibility of arrangement of the cable holder 70.
(8) The cable holder 70 includes the contact surface 71 contacting the cable 8A in the state where the cable holder 70 holds the cable 8A. The contact surface 71 is provided in a position separate from the rotator-side connector 22. Since the contact surface 71 is provided in the position separate from the rotator-side connector 22, it becomes easier to attach the cable 8A of the wire harness 8 to the cable holder 70.
(9) The contact surface 71 extends along at least one of the longitudinal direction D21 of the cable 8A and the circumferential direction D22 defined along the outer periphery of the cable 8A in the state where the cable holder 70 holds the cable 8A. Since the contact surface 71 extends along at least one of the longitudinal direction D21 and the circumferential direction D22 of the cable 8A, it becomes easier to ensure a larger area of the contact surface 71. Thus, the cable holder 70 can reliably hold the cable 8A.
(10) The cable holder 70 includes: the holder body 72 including the contact surface 71; and the coupling portion 73 coupling the rotator 20 and the holder body 72. Thus, the coupling portion 73 can reliably couple the holder body 72 to the rotator 20.
(11) The holder body 72 includes the holding hole 76 in which the cable 8A is arranged in the state where the cable holder 70 holds the cable 8A. The inner peripheral surface of the holding hole 76 includes the contact surface 71. Thus, the holding hole 76 of the holder body 72 can reliably hold the cable 8A of the wire harness 8.
(12) The holder body 72 extends along the longitudinal direction D21 of the cable 8A in the state where the cable holder 70 holds the cable 8A. Thus, the holder body 72 can reliably hold the cable 8A.
(13) The cable holder 70 includes the attachment portion 74 including the attachment hole 75 and provided to the rotator 20. The coupling portion 73 protrudes from the holder body 72 and is inserted in the attachment hole 75 in the state where the coupling portion 73 couples the rotator 20 and the holder body 72. Thus, the coupling portion 73 and the attachment portion 74 enable the holder body 72 to be attached to the rotator 20.
(14) The attachment portion 74 is a separate member from the rotator-side connector 22 and is attached to the rotator-side connector 22. Since the attachment portion 74 is a separate member from the rotator-side connector 22, the structure of the attachment portion 74 can be modified depending on the specification of the rotary connector device 6. Therefore, the cable holder 70 can be applied to various rotary connector devices 6. Additionally, the cable holder 70 can be retrofitted to the rotator-side connector 22 of a rotary connector device that is not equipped with the cable holder 70.

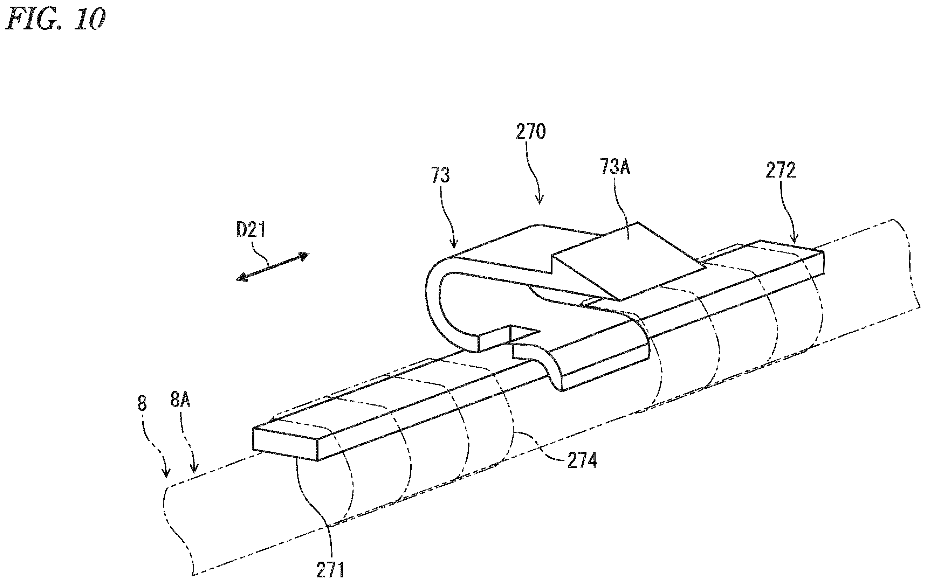

In the above-mentioned embodiments, the contact surface 71 of the cable holder 70 extends along the longitudinal direction D21 and the circumferential direction D22 of the cable 8A in the state where the cable holder 70 holds the cable 8A. However, the cable holder 70 can have structures other than the structures illustrated in FIGS. 10 to 18.

For example, the cable holder 270 shown in FIG. 10 includes a contact surface 271 contacting the cable 8A in a state where the cable holder 270 holds the cable 8A. The contact surface 271 is provided in a position separate from the rotator-side connector 22. The contact surface 271 extends along at least one of the longitudinal direction D21 of the cable 8A and the circumferential direction D22 defined along the outer periphery of the cable 8A in the state where the cable holder 270 holds the cable 8A. In the present modification, the contact surface 271 extends along only the longitudinal direction D21 in the state where the cable holder 270 holds the cable 8A.

The cable holder 270 includes: a holder body 272 including the contact surface 271; and the coupling portion 73 coupling the rotator 20 and the holder body 272. The holder body 272 extends from the coupling portion 73 in the longitudinal direction D21. The holder body 72 is arranged along the cable 8A. The cable holder 270 includes a fastening portion 274. The fastening portion 274 fastens the cable 8A to the holder body 72. The fastening portion 274 includes, for example, a tape.

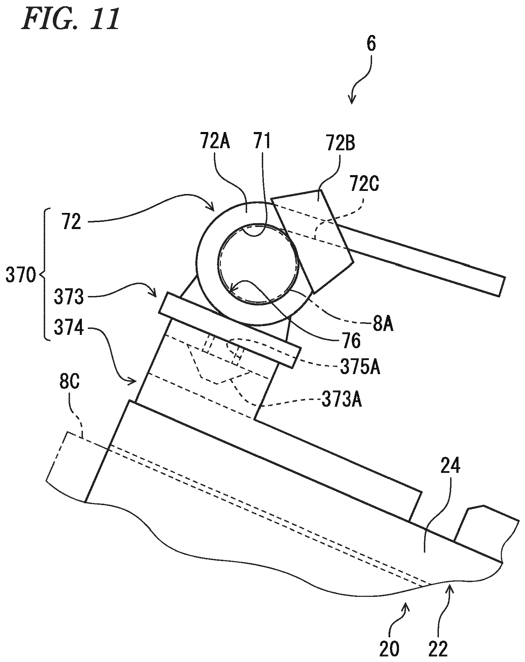

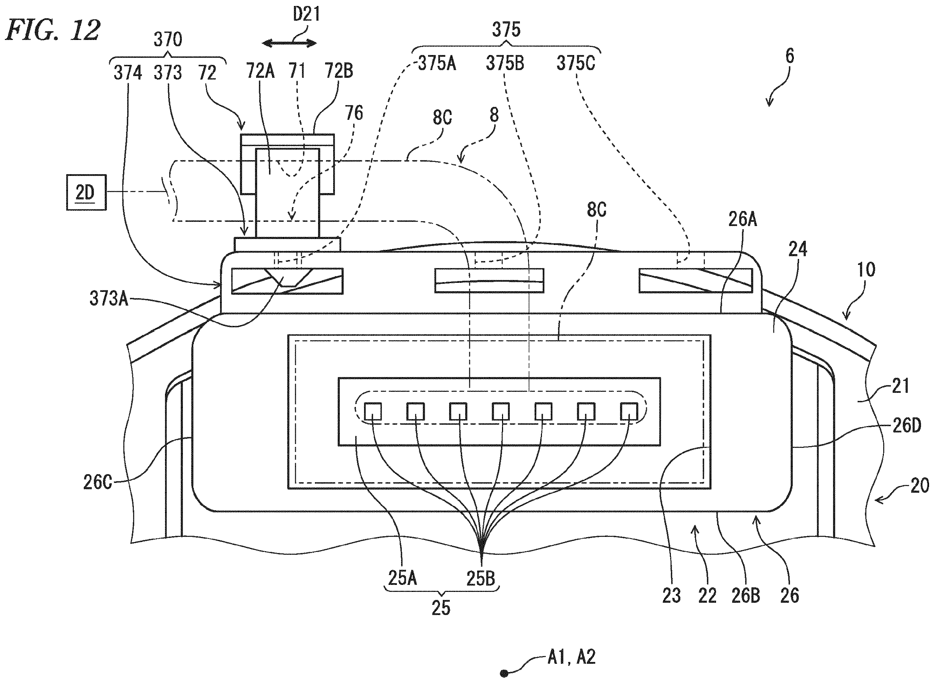

A cable holder 370 shown in FIGS. 11 and 12 includes the contact surface 71 contacting the cable 8A in a state where the cable holder 370 holds the cable 8A. The cable holder 370 includes: the holder body 72 including the contact surface 71; and a coupling portion 373 coupling the rotator 20 and the holder body 72.

As seen in FIG. 12, the cable holder 370 includes an attachment portion 374 provided to the rotator 20. The attachment portion 374 includes an attachment hole 375. In the present modification, the attachment portion 374 is a separate member from the rotator-side connector 22 and is attached to the rotator-side connector 22. The attachment hole 375 includes a plurality of attachment holes 375A, 375B, and 375C. However, the total number of the attachment holes of the attachment portion 374 is not limited to three. The attachment portion 374 can be integrally provided with the rotator-side connector 22 as a one-piece member.

The coupling portion 373 protrudes from the holder body 72. The coupling portion 373 is inserted in the attachment hole 375 in a state where the coupling portion 373 couples the rotator 20 and the holder body 72. The coupling portion 373 is inserted in one of the plurality of attachment holes 375A, 375B, and 375C (in FIG. 12, the attachment hole 375A) in a state where the coupling portion 373 couples the rotator 20 the holder body 72.

The coupling portion 373 includes a hook 373A. The hook 373A is hooked onto the attachment portion 374 in the state where the coupling portion 373 couples the rotator 20 and the holder body 72. However, the structure of the coupling portion 373 is not limited to the illustrated structure.

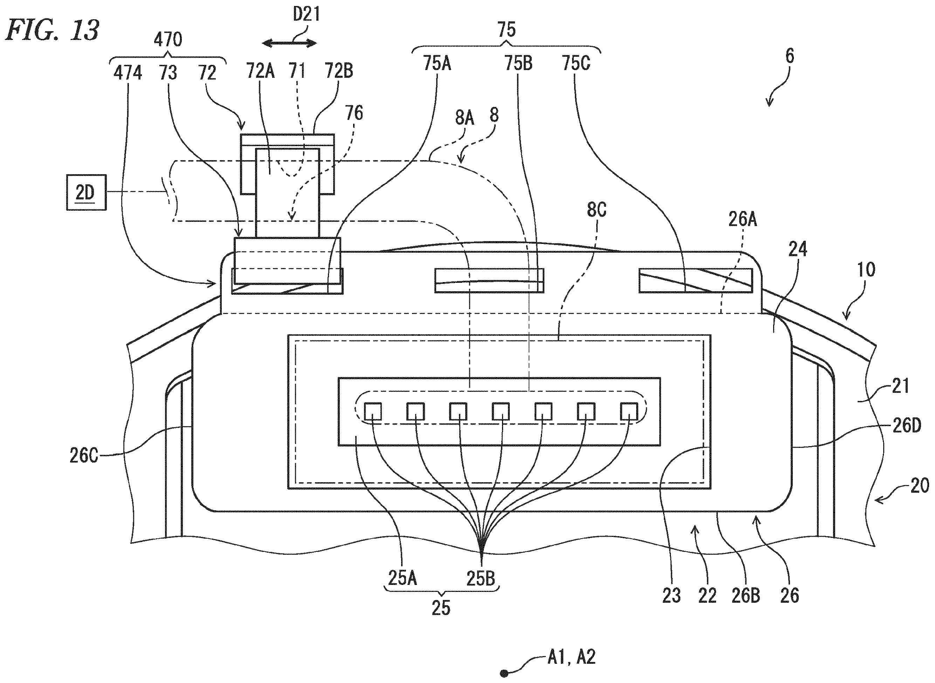

A cable holder 470 shown in FIG. 13 includes the contact surface 71 contacting the cable 8A in a state where the cable holder 470 holds the cable 8A. The contact surface 71 is provided in a position separate from the rotator-side connector 22. The cable holder 470 includes: the holder body 72 including the contact surface 71; and the coupling portion 73 coupling the rotator 20 and the holder body 72.

The cable holder 470 includes an attachment portion 474 provided to the rotator 20. The attachment portion 474 includes the attachment hole 75. In the present modification, the attachment portion 474 is integrally provided with the rotator-side connector 22 as a one-piece member.

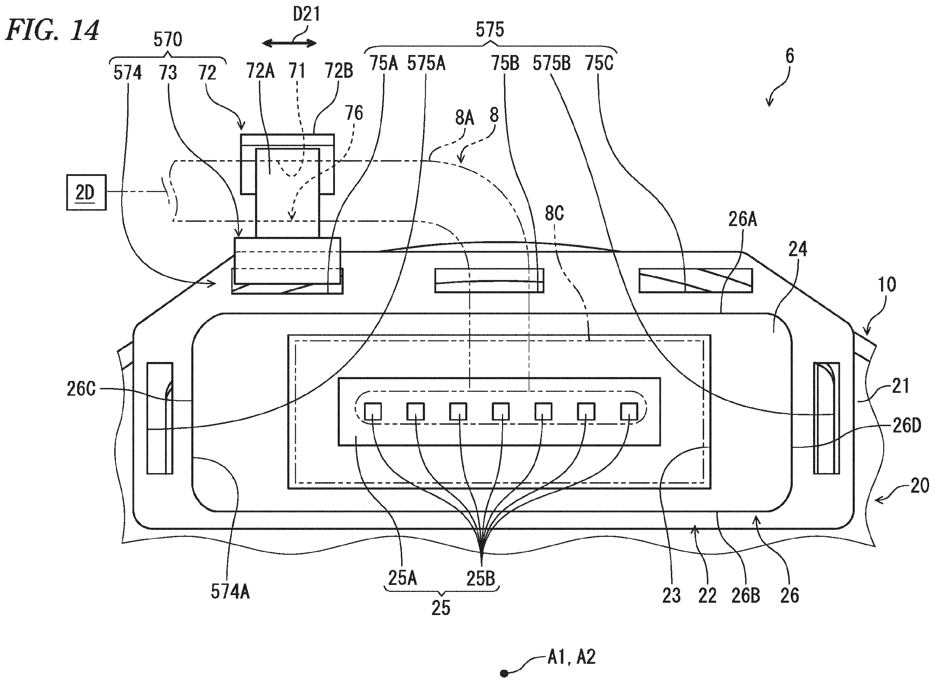

A cable holder 570 shown in FIG. 14 includes the contact surface 71 contacting the cable 8A in a state where the cable holder 570 holds the cable 8A. The contact surface 71 is provided in a position separate from the rotator-side connector 22. The cable holder 570 includes: the holder body 72 including the contact surface 71; and the coupling portion 73 coupling the rotator 20 and the holder body 72.

The cable holder 570 includes an attachment portion 574 provided to the rotator 20. The attachment portion 574 includes the attachment hole 575. In the present modification, the attachment portion 574 is a separate member from the rotator-side connector 22 and is attached to the rotator-side connector 22. The attachment hole 575 includes a plurality of attachment holes 75A, 75B, 75C, 575A, and 575B. However, the total number of the attachment holes of the attachment portion 574 is not limited to five. The attachment portion 574 can be integrally provided with the rotator-side connector 22 as a one-piece member.

The coupling portion 73 is inserted in the attachment hole 575 in the state where the coupling portion 73 couples the rotator 20 and the holder body 72. The coupling portion 73 is inserted in one of the plurality of attachment hole 75A, 75B, 75C, 575A, and 575B (in FIG. 14, the attachment hole 75A) in the state where the coupling portion 73 couples the rotator 20 and the holder body 72.

The attachment portion 574 includes the opening 574A. The attachment portion 574 is attached to the rotator-side connector 22 by inserting the connector case 24 of the rotator-side connector 22 in the opening 574A.

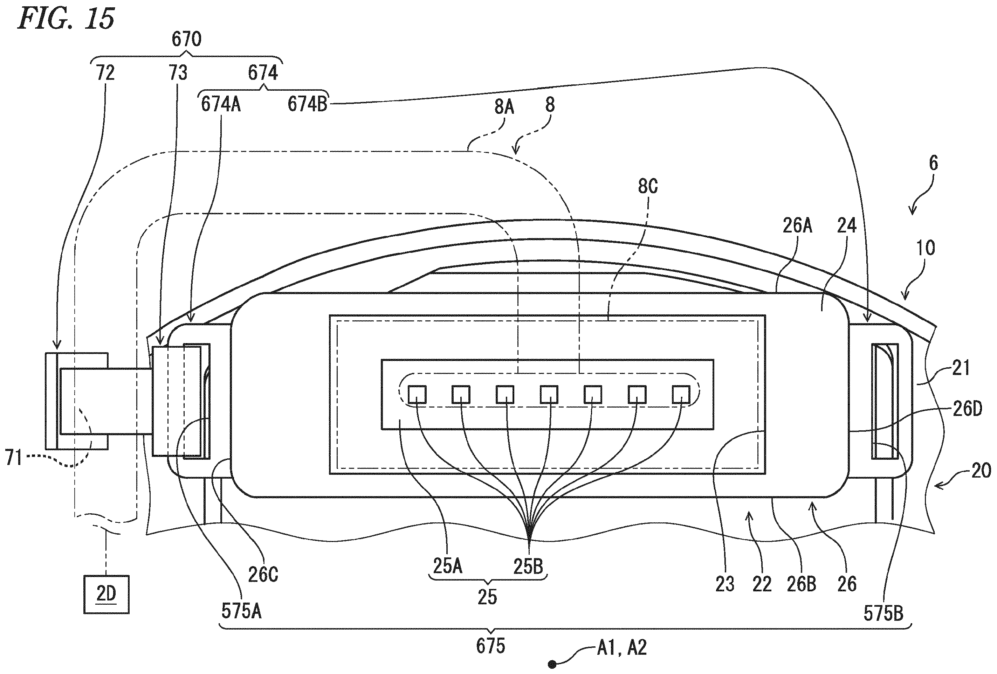

A cable holder 670 shown in FIG. 15 includes the contact surface 71 contacting the cable 8A in a state where the cable holder 670 holds the cable 8A. The contact surface 71 is provided in a position separate from the rotator-side connector 22. The cable holder 670 includes: the holder body 72 including the contact surface 71; and the coupling portion 73 coupling the rotator 20 and the holder body 72.

A cable holder 670 includes an attachment portion 674 provided to the rotator 20. The attachment portion 674 includes an attachment hole 675. In the present modification, the attachment portion 674 is a separate member from the rotator-side connector 22 and is attached to the rotator-side connector 22. The attachment hole 675 includes the plurality of attachment holes 575A and 575B. The attachment portion 674 includes a first attachment portion 674A and a second attachment portion 674B. The first attachment portion 674A is a separate member from the second attachment portion 674B. The first attachment portion 674A includes the attachment hole 575A. The second attachment portion 674B includes the attachment hole 575B. The first attachment portion 674A is attached to the third outer surface 26C. The second attachment portion 674B is attached to the fourth outer surface 26D. However, the attachment portion 674 can be integrally provided as a one-piece member. A total number of attachment holes of the attachment portion 674 is not limited to two. The attachment portion 674 can be integrally provided with the rotator-side connector 22 as a one-piece member.

The coupling portion 73 is inserted in the attachment hole 675 in the state where the coupling portion 73 couples the rotator 20 and the holder body 72. The coupling portion 73 is inserted in one of the plurality of attachment holes 575A and 575B (in FIG. 15, the attachment hole 575A) in the state where the coupling portion 73 couples the rotator 20 and the holder body 72.

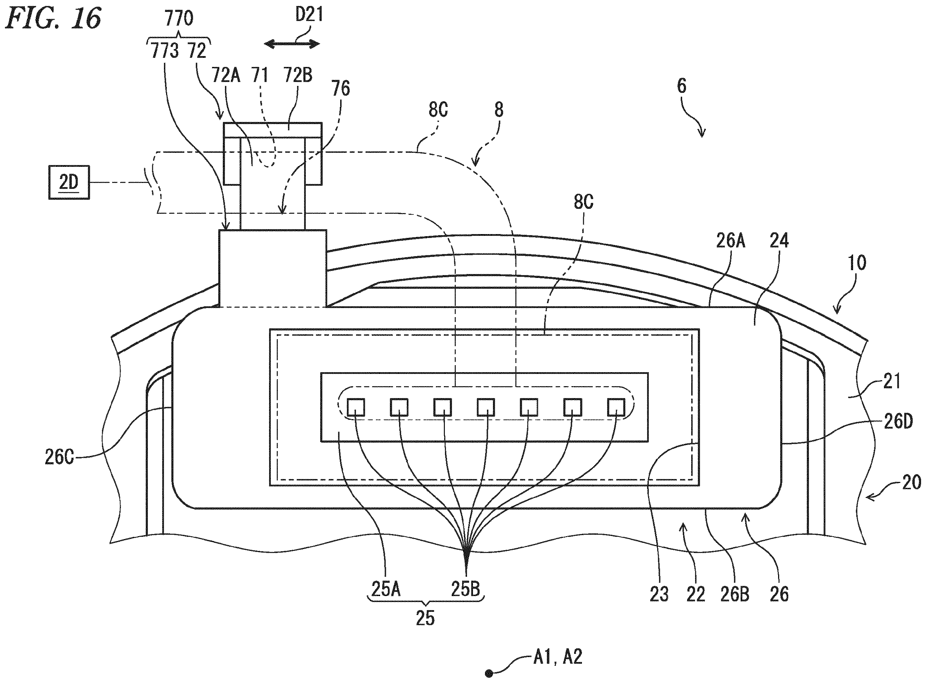

A cable holder 770 shown in FIG. 16 includes the contact surface 71 contacting the cable 8A in a state where the cable holder 770 holds the cable 8A. The cable holder 770 includes: the holder body 72 including the contact surface 71; and a coupling portion 773 coupling the rotator 20 and the holder body 72. In the present modification, the holder body 72 and the coupling portion 773 are integrally provided with the connector case 24 as a one-piece member. Thus, the attachment portion 74 is omitted from the cable holder 770.

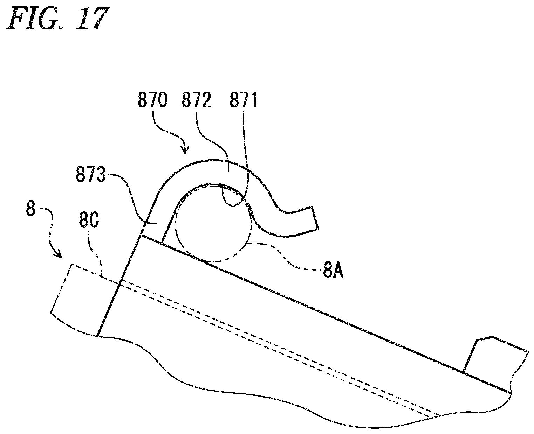

A cable holder 870 shown in FIG. 17 includes a contact surface 871 contacting the cable 8A in a state where the cable holder 870 holds the cable 8A. The cable holder 870 includes: a holder body 872 including the contact surface 871; and a coupling portion 873 coupling the rotator 20 and the holder body 872. In the present modification, the holder body 872 and the coupling portion 873 are integrally provided with the connector case 24 as a one-piece member. Thus, the attachment portion 74 is omitted from the cable holder 870.

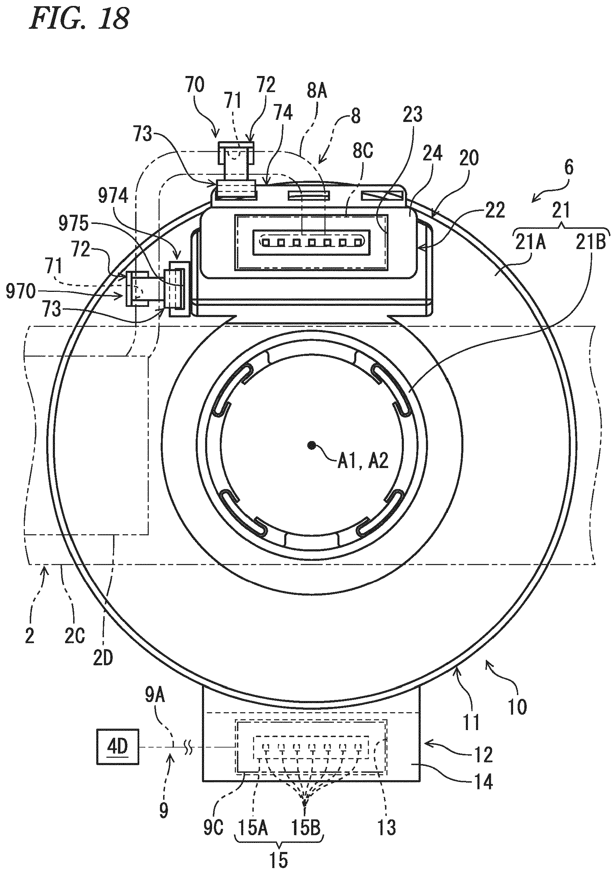

The rotary connector device 6 shown in FIG. 18 comprises a plurality of cable holders 70 and 970. The cable holder 970 includes: the holder body 72 including the contact surface 71; and the coupling portion 73 coupling the rotator 20 and the holder body 72. The cable holder 970 includes an attachment portion 974 provided to the rotator 20. The attachment portion 974 includes an attachment hole 975. In the present embodiment, the attachment portion 974 is provided to the rotator body 21 rather than the rotator-side connector 22. The coupling portion 73 is inserted in the attachment hole 975 in the state where the coupling portion 73 couples the rotator 20 and the holder body 72.

In a case where the rotary connector device 6 comprises a cable holder (for example, the cable holder 970) other than the cable holder 70, the cable holder 70 can be omitted from the rotary connector device 6. The rotary connector device 6 can comprise, in addition to at least one of the cable holders 70 and 970, another cable holder provided to at least one of the rotator body 21 and the rotator-side connector 22.

The structures of the above-mentioned embodiment and modifications can be combined.

In the present application, the term "comprising" and its derivatives are openended terms that describe the presence of constituent elements and do not exclude the presence of other constituent elements not described. This concept also applies to the terms "having," "including," and their derivatives.

In the present application, ordinal numbers such as "first" and "second" are merely identifiers, but do not have any other meanings (e.g., a particular order and the like). For example, the term "first element" does not imply an existence of "second element," and the term "second element" does not imply an existence of "first element.

The expressions "parallel," "perpendicular," and "coincident" in the present disclosure should not be interpreted strictly, but rather encompass "substantially parallel," "substantially perpendicular," and "substantially coincident," respectively. Moreover, expressions regarding other arrangements should also not be interpreted strictly.

The phrase "at least one of A and B" in the present disclosure encompasses, for example, (1) A alone, (2) B alone, and (3) both A and B. The phrase "at least one of A, B, and C" encompasses, for example, (1) A alone, (2) B alone, (3) C alone, (4) A and B, (5) B and C, (6) A and C, and (7) all A, B, and C. In the present disclosure, the phrase "at least one of A and B" is not interpreted as "at least one of A and at least one of B."

In view of the above disclosure, it is obvious that various changes and modifications of the present invention are possible. Therefore, the present invention may be implemented in a manner different from that of the specific disclosure of the present application to the extent that it does not depart from the scope of the appended claims.

### Reference Signs List

2: steering wheel
4: vehicle body
6: rotary connector device
8: wire harness
8A: cable
8B: end portion
8C: harness connector
10: stator
11: stator body
12: stator-side connector
13: connector housing space
14: connector case
20: rotator
21: rotator body
22: rotator-side connector
23: connector housing space
24: connector case
26: outer surface
26A: first outer surface
26B: second outer surface
26C: third outer surface
26D: fourth outer surface
50: cable housing space
60: electric cable
70: cable holder
71: contact surface
72: holder body
73: coupling portion
74: attachment portion
75: attachment hole
76: holding hole
270: cable holder
271: contact surface
272: holder body
274: fastening portion
370: cable holder
373: coupling portion
374: attachment portion
375: attachment hole
470: cable holder
474: attachment portion
570: cable holder
574: attachment portion
575: attachment hole
670: cable holder
674: attachment portion
675: attachment hole
770: cable holder
773: coupling portion
870: cable holder
873: coupling portion
970: cable holder
974: attachment portion
975: attachment hole
A1: steering rotational axis
A2: rotational axis
D1: axial direction
D21: longitudinal direction
D22: circumferential direction

## Claims

1. A rotary connector device (6) comprising:
a stator (10);
a rotator (20) including a rotator-side connector (22) detachably connectable to a harness connector (8C) provided to an end portion (8B) of a cable (8A) of a wire harness (8), the rotator (20) being provided rotatably relative to the stator (10) about a rotational axis (A2); and
a cable holder (70) provided to the rotator (20) to hold the cable (8A) in a state where the harness connector (8C) is connected to the rotator-side connector (22), **characterized in that** the cable holder (70) includes a contact surface (71) contacting the cable (8A) in a state where the cable holder (70) holds the cable (8A), and
the contact surface (71) is provided in a position separate from the rotator-side connector (22).

2. The rotary connector device (6) according to claim 1, wherein
the cable holder (70) is provided to the rotator (20) to hold the cable (8A) in a position separate from the harness connector (8C) in a state where the harness connector (8C) is connected to the rotator-side connector (22).

3. The rotary connector device (6) according to claim 1 or 2, wherein
the rotator (20) includes
a rotator body (21) provided rotatably relative to the stator (10) about a rotational axis (A2), and
the rotator-side connector (22) protruding along the rotational axis (A2) from the rotator body (21), and
the cable holder (70) is provided to at least one of the rotator-side connector (22) and the rotator body (21).

4. The rotary connector device (6) according to any one of claims 1 to 3, wherein
the rotator-side connector (22) includes a connector housing space (23) housing the harness connector (8C) in a state where the harness connector (8C) is connected to the rotator-side connector (22), and
the cable holder (70) is arranged outside of the connector housing space (23) when viewed from an axial direction defined along the rotational axis (A2).

5. The rotary connector device (6) according to claim 4, wherein
the rotator-side connector (22) includes a connector case (24) including the connector housing space (23), and
the cable holder (70) is provided to the connector case (24).

6. The rotary connector device (6) according to claim 4 or 5, wherein
the rotator-side connector (22) includes an outer surface (26) forming an outline of the rotator-side connector (22) when viewed from an axial direction defined along the rotational axis (A2), and
the cable holder (70) is provided to the outer surface (26).

7. The rotary connector device (6) according to claim 6, wherein
the outer surface (26) of the rotator-side connector (22) includes
a first outer surface (26A) arranged in a position farther from the rotational axis (A2) than the connector housing space (23),
a second outer surface (26B) provided on an opposite side of the first outer surface (26A) across the connector housing space (23),
a third outer surface (26C) extending from the first outer surface (26A) to the second outer surface (26B), and
a fourth outer surface (26D) extending from the first outer surface (26A) to the second outer surface (26B) and provided on an opposite side of the third outer surface (26C) across the connector housing space (23), and
the cable holder (70) is provided to at least one of the first outer surface (26A), the second outer surface (26B), the third outer surface (26C), and the fourth outer surface (26D).

8. The rotary connector device (6) according to claim 1, wherein
the contact surface (71) extends in at least one of a longitudinal direction of the cable (8A) and a circumferential direction defined along an outer periphery of the cable (8A) in a state where the cable holder (70) holds the cable (8A).

9. The rotary connector device (6) according to claim 1 or 8, wherein
the cable holder (70) includes
a holder body (72) including the contact surface (71), and
a coupling portion (73) coupling the rotator (20) and the holder body (72).

10. The rotary connector device (6) according to claim 9, wherein
the holder body (72) includes a holding hole (76) in which the cable (8A) is arranged in a state where the cable holder (70) holds the cable (8A), and
an inner peripheral surface of the holding hole (76) includes the contact surface (71).

11. The rotary connector device (6) according to claim 9 or 10, wherein
the holder body (72) extends along a longitudinal direction of the cable (8A) in a state where the cable holder (70) holds the cable (8A).

12. The rotary connector device (6) according to any one of claims 9 to 11, wherein
the cable holder (70) includes an attachment portion (74) including an attachment hole (75) and provided to the rotator (20), and
the coupling portion (73) protrudes from the holder body (72) and inserted in the attachment hole (75) in a state where the coupling portion (73) couples the rotator (20) and the holder body (72).

13. The rotary connector device (6) according to claim 12, wherein
the attachment portion (74) is a separate member from the rotator-side connector (22) and is attached to the rotator-side connector (22).

## Patentansprüche

1. Drehkonnektor-Vorrichtung (6), umfassend:
einen Stator (10);
einen Rotor (20), welcher einen rotorseitigen Konnektor (22) umfasst, welcher lösbar mit einem Kabelbaum-Konnektor (8C) verbindbar ist, welcher an einem Endabschnitt (8B) eines Kabels (8A) eines Kabelbaums (8) bereitgestellt ist, wobei der Rotor (20) relativ zu dem Stator (10) um eine Drehachse (A2) drehbar bereitgestellt ist; und
einen Kabelhalter (70), welcher an dem Rotor (20) bereitgestellt ist, um das Kabel (8A) in einem Zustand zu halten, in welchem der Kabelbaum-Konnektor (8C) mit dem rotorseitigen Konnektor (22) verbunden ist,
**dadurch gekennzeichnet, dass** der Kabelhalter (70) eine Kontaktfläche (71) umfasst, welche das Kabel (8A) in einem Zustand kontaktiert, in welchem der Kabelhalter (70) das Kabel (8A) hält, und
die Kontaktfläche (71) in einer von dem rotorseitigen Konnektor (22) beabstandeten Position bereitgestellt ist.

2. Drehkonnektor-Vorrichtung (6) nach Anspruch 1, wobei
der Kabelhalter (70) an dem Rotor (20) bereitgestellt ist, um das Kabel (8A) in einer von dem Kabelbaum-Konnektor (8C) beabstandeten Position zu halten, in einem Zustand, in welchem der Kabelbaum-Konnektor (8C) mit dem rotorseitigen Konnektor (22) verbunden ist.

3. Drehkonnektor-Vorrichtung (6) nach Anspruch 1 oder 2, wobei
der Rotor (20) umfasst:
einen Rotorkörper (21), welcher relativ zu dem Stator (10) um eine Drehachse (A2) drehbar bereitgestellt ist, und
den rotorseitigen Konnektor (22), welcher entlang der Drehachse (A2) von dem Rotorkörper (21) hervorsteht, und
der Kabelhalter (70) an wenigstens einem von dem rotorseitigen Konnektor (22) und dem Rotorkörper (21) bereitgestellt ist.

4. Drehkonnektor-Vorrichtung (6) nach einem der Ansprüche 1 bis 3, wobei
der rotorseitige Konnektor (22) einen Konnektor-Aufnahmeraum (23) umfasst, welcher den Kabelbaum-Konnektor (8C) in einem Zustand aufnimmt, in welchem der Kabelbaum-Konnektor (8C) mit dem rotorseitigen Konnektor (22) verbunden ist, und
der Kabelhalter (70) außerhalb des Konnektor-Aufnahmeraums (23) angeordnet ist, wenn aus einer Axialrichtung betrachtet, welche entlang der Drehachse (A2) definiert ist.

5. Drehkonnektor-Vorrichtung (6) nach Anspruch 4, wobei
der rotorseitige Konnektor (22) ein Konnektorgehäuse (24) umfasst, welches den Konnektor-Aufnahmeraum (23) umfasst, und
der Kabelhalter (70) an dem Konnektorgehäuse (24) bereitgestellt ist.

6. Drehkonnektor-Vorrichtung (6) nach Anspruch 4 oder 5, wobei
der rotorseitige Konnektor (22) eine Außenfläche (26) umfasst, welche einen Umriss des rotorseitigen Konnektors (22) bildet, wenn aus einer Axialrichtung betrachtet, welche entlang der Drehachse (A2) definiert ist, und
der Kabelhalter (70) an der Außenfläche (26) bereitgestellt ist.

7. Drehkonnektor-Vorrichtung (6) nach Anspruch 6, wobei
die Außenfläche (26) des rotorseitigen Konnektors (22) umfasst
eine erste Außenfläche (26A), welche in einer Position weiter entfernt von der Drehachse (A2) als der Konnektor-Aufnahmeraum (23) angeordnet ist,
eine zweite Außenfläche (26B), welche auf einer entgegengesetzten Seite der ersten Außenfläche (26A) über den Konnektor-Aufnahmeraum (23) hinweg bereitgestellt ist,
eine dritte Außenfläche (26C), welche sich von der ersten Außenfläche (26A) zu der zweiten Außenfläche (26B) erstreckt, und
eine vierte Außenfläche (26D), welche sich von der ersten Außenfläche (26A) zu der zweiten Außenfläche (26B) erstreckt und auf einer entgegengesetzten Seite der dritten Außenfläche (26C) über den Konnektor-Aufnahmeraum (23) hinweg bereitgestellt ist, und
der Kabelhalter (70) an wenigstens einer von der ersten Außenfläche (26A), der zweiten Außenfläche (26B), der dritten Außenfläche (26C) und der vierten Außenfläche (26D) bereitgestellt ist.

8. Drehkonnektor-Vorrichtung (6) nach Anspruch 1, wobei
die Kontaktfläche (71) sich in wenigstens einer von einer Längsrichtung des Kabels (8A) und einer Umfangsrichtung erstreckt, welche entlang eines Außenumfangs des Kabels (8A) definiert ist, in einem Zustand, in welchem der Kabelhalter (70) das Kabel (8A) hält.

9. Drehkonnektor-Vorrichtung (6) nach Anspruch 1 oder 8, wobei
der Kabelhalter (70) umfasst:
einen Halterkörper (72), welcher die Kontaktfläche (71) umfasst, und
einen Kopplungsabschnitt (73), welcher den Rotor (20) und den Halterkörper (72) koppelt.

10. Drehkonnektor-Vorrichtung (6) nach Anspruch 9, wobei
der Halterkörper (72) ein Halteloch (76) umfasst, in welchem das Kabel (8A) in einem Zustand angeordnet ist, in welchem der Kabelhalter (70) das Kabel (8A) hält, und
eine Innenumfangsfläche des Haltelochs (76) die Kontaktfläche (71) umfasst.

11. Drehkonnektor-Vorrichtung (6) nach Anspruch 9 oder 10, wobei
der Halterkörper (72) sich entlang einer Längsrichtung des Kabels (8A) in einem Zustand erstreckt, in welchem der Kabelhalter (70) das Kabel (8A) hält.

12. Drehkonnektor-Vorrichtung (6) nach einem der Ansprüche 9 bis 11, wobei
der Kabelhalter (70) einen Anbringungsabschnitt (74) umfasst, welcher ein Anbringungsloch (75) umfasst und an dem Rotor (20) bereitgestellt ist, und
der Kopplungsabschnitt (73) von dem Halterkörper (72) hervorsteht und in dem Anbringungsloch (75) eingeführt ist, in einem Zustand, in welchem der Kopplungsabschnitt (73) den Rotor (20) und den Halterkörper (72) koppelt.

13. Drehkonnektor-Vorrichtung (6) nach Anspruch 12, wobei
der Anbringungsabschnitt (74) ein von dem rotorseitigen Konnektor (22) separates Element ist und an dem rotorseitigen Konnektor (22) angebracht ist.

## Revendications

1. Dispositif de connecteur rotatif (6) comprenant :
un stator (10) ;
un rotateur (20) incluant un connecteur côté rotateur (22) pouvant être raccordé de manière amovible à un connecteur de faisceau (8C) prévu au niveau d'une partie d'extrémité (8B) d'un câble (8A) d'un faisceau de câbles (8), le rotateur (20) étant prévu rotatif par rapport au stator (10) autour d'un axe de rotation (A2) ; et
un support de câble (70) prévu sur le rotateur (20) pour maintenir le câble (8A) dans un état où le connecteur de faisceau (8C) est raccordé au connecteur côté rotateur (22),
**caractérisé en ce que** le support de câble (70) comprend une surface de contact (71) venant en contact avec le câble (8A) dans un état où le support de câble (70) maintient le câble (8A), et
la surface de contact (71) est prévue dans une position séparée du connecteur côté rotateur (22).

2. Dispositif de connecteur rotatif (6) selon la revendication 1, dans lequel
le support de câble (70) est prévu sur le rotateur (20) pour maintenir le câble (8A) dans une position séparée du connecteur de faisceau (8C) dans un état où le connecteur de faisceau (8C) est raccordé au connecteur côté rotateur (22).

3. Dispositif de connecteur rotatif (6) selon la revendication 1 ou 2, dans lequel
le rotateur (20) comprend :
un corps de rotateur (21) prévu rotatif par rapport au stator (10) autour d'un axe de rotation (A2), et
le connecteur côté rotateur (22) faisant saillie le long de l'axe de rotation (A2) depuis le corps de rotateur (21), et
le support de câble (70) est prévu sur au moins l'un parmi le connecteur côté rotateur (22) et le corps de rotateur (21).

4. Dispositif de connecteur rotatif (6) selon l'une quelconque des revendications 1 à 3, dans lequel
le connecteur côté rotateur (22) comprend un espace de logement de connecteur (23) logeant le connecteur de faisceau (8C) dans un état où le connecteur de faisceau (8C) est raccordé au connecteur côté rotateur (22), et
le support de câble (70) est agencé à l'extérieur de l'espace de logement de connecteur (23) lorsqu'il est vu depuis une direction axiale définie le long de l'axe de rotation (A2).

5. Dispositif de connecteur rotatif (6) selon la revendication 4, dans lequel
le connecteur côté rotateur (22) comprend un boîtier de connecteur (24) incluant l'espace de logement de connecteur (23), et
le support de câble (70) est prévu sur le boîtier de connecteur (24).

6. Dispositif de connecteur rotatif (6) selon la revendication 4 ou 5, dans lequel
le connecteur côté rotateur (22) comprend une surface externe (26) formant un contour du connecteur côté rotateur (22) lorsqu'il est vu depuis une direction axiale définie le long de l'axe de rotation (A2), et
le support de câble (70) est prévu sur la surface externe (26).

7. Dispositif de connecteur rotatif (6) selon la revendication 6, dans lequel
la surface externe (26) du connecteur côté rotateur (22) comprend :
une première surface externe (26A) agencée dans une position plus éloignée de l'axe de rotation (A2) que l'espace de logement de connecteur (23),
une deuxième surface externe (26B) prévue sur un côté opposé de la première surface externe (26A) à travers l'espace de logement de connecteur (23),
une troisième surface externe (26C) s'étendant depuis la première surface externe (26A) jusqu'à la deuxième surface externe (26B), et
une quatrième surface externe (26D) s'étendant depuis la première surface externe (26A) jusqu'à la deuxième surface externe (26B) et prévue sur un côté opposé de la troisième surface externe (26C) à travers l'espace de logement de connecteur (23), et
le support de câble (70) est prévu sur au moins l'une parmi la première surface externe (26A), la deuxième surface externe (26B), la troisième surface externe (26C) et la quatrième surface externe (26D).

8. Dispositif de connecteur rotatif (6) selon la revendication 1, dans lequel
la surface de contact (71) s'étend dans au moins l'une parmi une direction longitudinale du câble (8A) et une direction circonférentielle définie le long d'une périphérie externe du câble (8A) dans un état où le support de câble (70) maintient le câble (8A).

9. Dispositif de connecteur rotatif (6) selon la revendication 1 ou 8, dans lequel
le support de câble (70) comprend :
un corps de support (72) incluant la surface de contact (71), et
une partie d'accouplement (73) accouplant le rotateur (20) et le corps de support (72).

10. Dispositif de connecteur rotatif (6) selon la revendication 9, dans lequel
le corps de support (72) comprend un trou de maintien (76) dans lequel le câble (8A) est agencé dans un état où le support de câble (70) maintient le câble (8A), et
une surface périphérique interne du trou de maintien (76) comprend la surface de contact (71).

11. Dispositif de connecteur rotatif (6) selon la revendication 9 ou 10, dans lequel
le corps de support (72) s'étend le long d'une direction longitudinale du câble (8A) dans un état où le support de câble (70) maintient le câble (8A).

12. Dispositif de connecteur rotatif (6) selon l'une quelconque des revendications 9 à 11, dans lequel
le support de câble (70) comprend une partie de fixation (74) incluant un trou de fixation (75) et prévue sur le rotateur (20), et
la partie d'accouplement (73) fait saillie depuis le corps de support (72) et est insérée dans le trou de fixation (75) dans un état où la partie d'accouplement (73) accouple le rotateur (20) et le corps de support (72).

13. Dispositif de connecteur rotatif (6) selon la revendication 12, dans lequel
la partie de fixation (74) est un élément séparé du connecteur côté rotateur (22) et est fixée au connecteur côté rotateur (22).
